# EUROPEAN PATENT APPLICATION

(11) **EP 4 450 459 A1**
(43) Date of publication of application: **23.10.2024**
(21) Application number: 24159512.3
(22) Date of filing: 23.02.2024
(51) Int. Cl.: C01B 32/215

(54) **METHOD OF PRODUCING A PURIFIED GRAPHITE FROM RECYCLED BATTERIES**

(30) Priority: 27.02.2023 US 202318114488; 27.02.2023 WO PCT/US2023/013937
(71) Applicant: Ascend Elements, Inc., Westborough, MA 01581 (US); Mexichem Fluor Inc., Waltham, MA 02451 (US)
(72) Inventor: TANG, Yilun, Westborough, MA 01581 (US); GRATZ, Eric, Westborough, MA 01581 (US); ASHOUR, Rakan, Westborough, MA 01581 (US); VENKATARAMAN, Karthik, Arlington, MA 02474 (US)
(74) Representative: Greaves Brewster LLP

(57) **Abstract**

A method of producing a purified graphite from a recycled battery stream for use in as anode material in Li-ion batteries is described. The method comprises a leaching step to obtain a precipitate comprising graphite by filtration, which is then iteratively roasted as a slurry with an aqueous solution of a hydroxide base and subsequently washed to form a purified graphite.

## Description

### BACKGROUND

Lithium-ion (Li-ion) batteries are a preferred chemistry for secondary (rechargeable) batteries in high discharge applications such as electrical vehicles (EVs) and power tools where electric motors are called upon for rapid acceleration. Li-ion batteries include a charge material, conductive powder and binder applied to or deposited on a current collector, typically a planar sheet of copper or aluminum. The charge material includes anode material, typically graphite or carbon, and cathode material, which includes a predetermined ratio of metals such as lithium, nickel, manganese, cobalt, aluminum, iron and phosphorous, defining a so-called "battery chemistry" of the Li-ion cells. The preferred battery chemistry varies between vendors and applications, and recycling efforts of Li-ion batteries typically adhere to a prescribed molar ratio of the battery chemistry in recycled charge material products. A purity of the constituent products is highly relevant to the quality and performance of the recycled cells, often relying on so-called "battery grade" materials, implying a 99.5% purity.

### SUMMARY

A purification process for recycled graphite for use as anode material in Li-ion batteries includes a sequence of roastings followed by washing with deionized (DI) water and optionally followed by an acid wash. A graphite source results from a suitable process such as acid leaching of black mass from a battery recycling stream. Impurities, most notably aluminum oxide, are often present in trace amounts in the graphite source. A roasting process iterates multiple times for purifying the graphite, combined with washing, and is believed to convert water insoluble metal impurities into water-soluble metal salts, such as metal hydroxides. Removal of the metal salts in the graphite occurs by leaching in a dilute sodium hydroxide solution and washing the purified graphite for further removal of the water-soluble impurities.

Configurations herein are based, in part, on the observation that the increase in popularity of electric and hybrid vehicles (EV/HV) generates a large volume of spent Li-ion batteries including charge material such as NMC (Ni, Mn, Co) cathode material, and anode material including graphite and similar carbon forms. Recycling processes for NMC charge material performs leaching of the spent NMC charge material, often with augmentation using control (virgin) stock of the Ni, Mn, Co salts to achieve a predetermined ratio of the charge material metals according to technical or customer specifications. Graphite from the spent Li-ion batteries can also be recovered. Unfortunately, conventional approaches to NMC recycling suffer from the shortcoming that particles of recovered graphite have impurities, most notably aluminum oxide, remaining as residue after the shredding and leaching process. It can be problematic to satisfy customer specifications for performance and physical anode material characteristics when substantial quantities of impurities remain in the recycled graphite product. Accordingly, configurations herein substantially overcome the shortcomings of conventional battery recycling by producing anode material including graphite with improved purity, at or above 99.5% purity, and approaching 99.9%.

In further detail, in a battery recycling environment for producing purified graphite for battery anode material, recycling includes leaching a black mass of exhausted lithium-ion batteries to obtain a leach solution and a precipitate. The leach solution incorporates much of the cathode material, leaving the remainder as undissolved precipitate including substantial proportions of graphite and/or other carbon forms used for the anode material. A two-phase roasting process includes first sintering the precipitate by preparing a slurry of the precipitate with a first aqueous solution of a hydroxide base having a concentration of hydroxide of ≤ 40% by weight and roasting the slurry of the precipitate at a temperature of < 250°C to form a sintered precipitate. Next, further sintering of the sintered precipitate includes preparing a slurry of the sintered precipitate with a second aqueous solution of a hydroxide base having a concentration of hydroxide of ≤ 40% by weight, and again roasting the slurry of the sintered precipitate at a temperature of < 250°C to form a sintered graphite. A washing of the sintered graphite yields a purified graphite for an anode charge material (anode material) in a recycled battery.

### BRIEF DESCRIPTION OF THE DRAWINGS

The foregoing and other features will be apparent from the following description of particular embodiments disclosed herein, as illustrated in the accompanying drawings in which like reference characters refer to the same parts throughout the different views. The drawings are not necessarily to scale, emphasis instead being placed upon illustrating the principles of the invention.
Fig. 1 is a context diagram of a recycling environment suitable for use with configurations herein;
Fig. 2 is a flowchart of a recycling process as disclosed herein; and
Figs. 3A-3G are examples of results recycled purified graphite.

### DETAILED DESCRIPTION

Depicted below is an example method and approach for recycling batteries such as NMC batteries. Configurations herein employ NMC battery chemistry as an example, however the disclosed approach may be practiced with any suitable battery chemistry. Li-ion batteries employ a so-called battery chemistry, which defines the types and ratios of metal ions used to form the cathode material. The particular ratio is set by the manufacturer or recipient of the recycled charge material. Vendors of charge material and charge material precursor generate charge material products meeting the manufacturer prescribed specifications. Anode material is almost always carbon or graphite formulations, and the purity and form of the graphite is also set by the manufacturer.

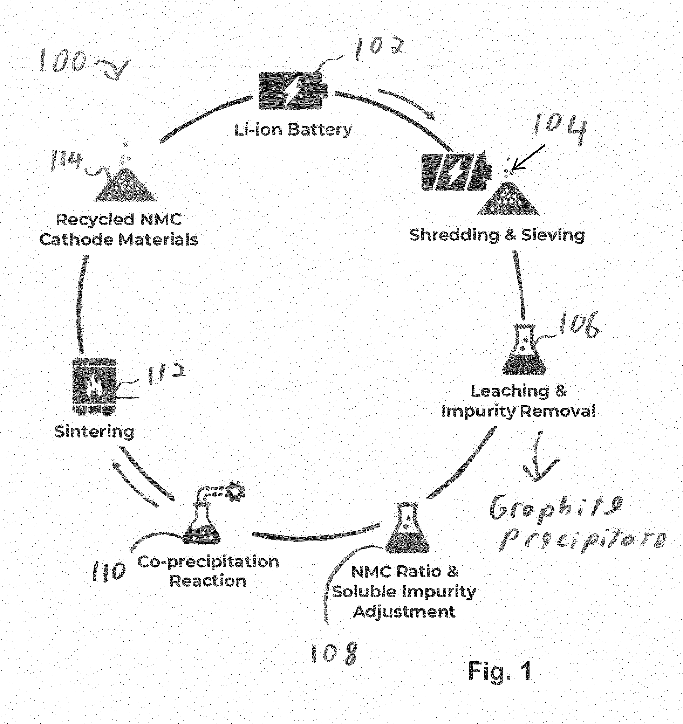

Fig. 1 is a context diagram of a recycling environment suitable for use with configurations herein. Referring to Fig. 1, a recycling scenario 100 begins with a deployed Li-ion battery 102, typically from an EV. Li-ion batteries 102 have a finite number of charge cycles before the ability of the charge material to accept sufficient charge degrades substantially. Add to this the batteries from premature end-of-life due to vehicle failure, collision damage, etc. The collective end-of-life recycling stream contributes to an abundant supply of exhausted batteries comprising spent cells and charge material 104. The batteries are discharged and agitated into a granular black mass through physical grinding, shredding and pulverizing. A leach process receives the black mass including the charge material and any incidental casing and current collectors of copper and aluminum. The black mass, including both cathode material of cathode material metal salts and anode materials of carbon and graphite, is used to form a leach solution 106 of dissolved charge material metals.

The leach solution is then separated from the graphite rich precipitate for harvesting purified graphite, discussed further below, while the leach solution follows a separate recycling branch. For completeness, the leach solution includes at least Ni, Mn and Co in a sulfate solution from sulfuric acid leaching, however other charge material metals and/or leach acid may be employed. The leach solution 106 has a molar ratio of charge material metals (Ni, Mn and Co) based on the constituent composition of the incoming recycling stream. The molar ratio is adjusted with additional metal salts (Ni, Mn and Co salts), such as sulfate salts (typically a virgin or control form of fresh materials) to yield a target ratio-adjusted solution 108.

A coprecipitation reaction occurs in one or more vessels 110 by adjusting the pH of the leach solution for precipitating the charge material metals (charge materials) in the desired ratio resulting from the adjustment. Sodium hydroxide or another strong base causes the charge material metals, such as NMC, to fall out of solution in a granular form, separable by filtration, typically as hydroxides. This granular form coprecipitated from the pH adjustment of the leach solution is a cathode material precursor, having the desired molar ratio for a target battery chemistry for new, recycled batteries. Sintering in a furnace 112 with lithium carbonate or other lithium salts forms the active cathode material 114 for the recycled Li-ion battery. In an example configuration, active cathode material LiNiₓMn_{y}Co_{z}O₂ is synthesized by sintering NiₓMn_{y}Co_{z}(OH)₂ and Li₂CO₃, where x, y and z represent the respective molar ratios of Ni, Mn and Co. Common chemistries include NMC 111, representing equal molar components of Ni, Mn and Co, NMC 811, NMC 622 and NMC 532, however any suitable molar ratio may be achieved by the ratio adjustment in the leach solution 106-108 and sintering. The recycled cathode material may then be merged back into the recycling stream as cathode material, while the process below provides the anode material for the recycled battery.

The remaining, post leach precipitate complements the cathode material recycling by providing a graphite source. Purification of the graphite from spent lithium-ion batteries has been found to be capable of providing anode quality graphite materials (> 99.5%) for lithium-ion batteries. Purification of the graphite precipitate is achieved by an iterative roasting process that is believed to convert water insoluble metal impurities to water-soluble metal hydroxides, followed by a washing process that is believed to remove these metal hydroxides in the graphite. An optional acid washing process can also be used to produce a further purified recycled graphite.

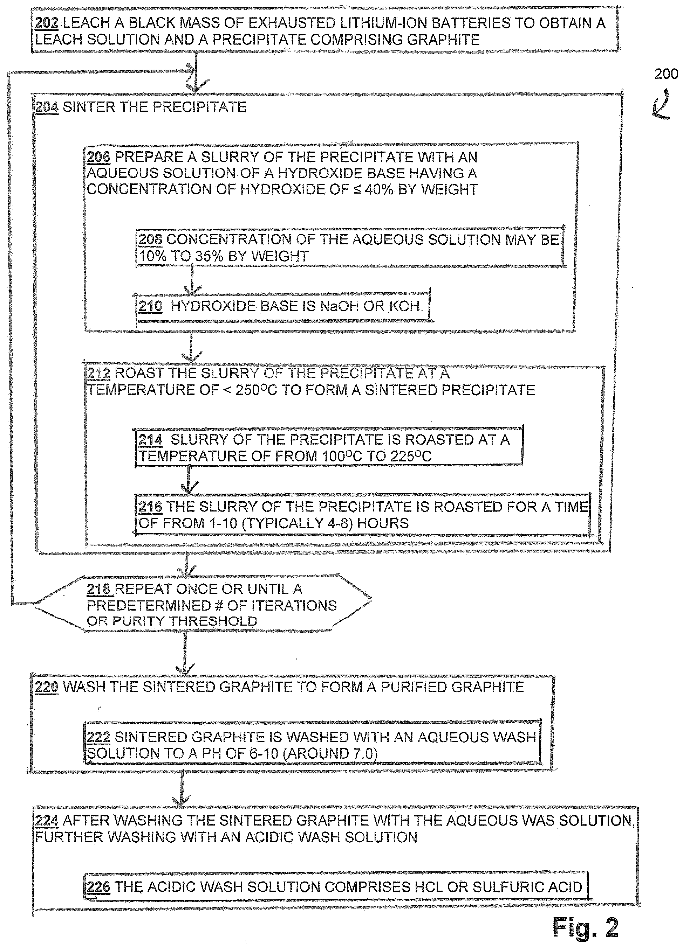

Fig. 2 is a flowchart 200 of the graphite recycling process as disclosed herein. Referring to Figs 1 and 2, leaching of the black mass in step 106 provides a leach solution and a precipitate, which comprises primarily solid, unleached graphite from the battery anodes as well as various impurities. The dissolved cathode materials are leached and carried away by the leach solution, as disclosed at step 202. The undissolved precipitate contains a high percentage of graphite which is ideal for use as recycled anode material, comingled with trace amounts of impurities, and typically has a purity of from 82% to 97%. The precipitate may further comprise a ceramic impurity, such as an alumina, which is one of the most difficult impurities to remove from the graphite.

The disclosed method of producing purified graphite from the recycled battery stream has been found to efficiently and effectively remove the impurities and commences by sintering the precipitate, as depicted at step 204. This includes preparing a slurry of the precipitate with a first aqueous solution of a hydroxide base having a concentration of a hydroxide of ≤ 40% by weight, as shown at step 206. The concentration of the first aqueous solution is preferably from 10% to 35% by weight, as depicted at step 208. Most preferred is a concentration of hydroxide base that is 20% to 30% by weight. In a particular configuration, the hydroxide base is NaOH or KOH, as disclosed at step 210. However, any suitable hydroxide may be mixed with the precipitate. For example, the first aqueous solution of hydroxide base is a 7.5M NaOH solution, which is combined with the precipitate while mixing. The combination forms a thick paste, which can be somewhat resistant to mixing. However, a thorough coating of the graphite-containing precipitate is preferably formed.

The slurry of the precipitate is then roasted at a temperature of < 250°C to form a sintered precipitate, as depicted at step 212. In some iterations, roasting at a temperature of from 100°C to 225°C may be sufficient, as shown at step 214, including a temperature of from 120°C to 180°C. Duration of roasting may be for a time of from 1 to 20 hours, depicted at step 216, including from 1 to 15 hours. The roasting time can be adjusted relative to the roasting temperature - higher temperatures can accommodate a lower time (fast roasting) while lower temperatures would benefit from a longer time (slow roasting). During roasting, it is preferable to mix or agitate the roasting slurry, such as about every 40 minutes.

The hydroxide slurry mixing and roasting can be repeated until a predetermined number of iterations or purity threshold is achieved, as depicted at step 218. In most cases, two roasting cycles has been found to be surprisingly efficient at forming battery grade graphite of at least 99% purity. For example, a slurry of the sintered precipitate resulting from the first iteration can be prepared with a second aqueous solution of hydroxide base having a concentration of a hydroxide of ≤ 40% by weight. The slurry of the precipitate is then roasted at a temperature of < 250°C to form a sintered graphite. Additional iterations may also be used. For each iteration, the concentrations of the aqueous solutions of hydroxide base and/or the type of base can be the same or different as previous or subsequent iterations. Also, the roasting times and temperatures used in each iteration can be the same or can vary from one another.

In general, the amount of the aqueous solutions of hydroxide base can vary depending on the amount of graphite present. In an example configuration, encompassing two roasting iterations, the slurry of the precipitate has a ratio of the precipitate to the first aqueous solution (first iteration) of about 1:1 to 1:4, and the slurry of the sintered precipitate is formed with a ratio of the sintered precipitate to the second aqueous solution (second iteration) of about 1:1 to 1:4. A different ratio can also be used for each iteration.

It is believed that the sintering forms water soluble hydroxides, most notably residual hydroxides of the aluminum oxide. Accordingly, in a preferred embodiment, the sintered graphite is washed to form a purified graphite, as shown at step 220. The sintered graphite is typically washed with an aqueous wash solution to reduce the pH to approach 7, such as between 6 and 10, including between 6 and 8, as depicted at step 222. Washing includes a suitable aqueous solution, including DI water and a weak solution of hydroxide such as sodium hydroxide, having a lower concentration than solutions used for roasting. Straight water or an aqueous alkaline solution having a concentration of base that is ≤ 0.1M is also effective. In a specific example, a 0.1M NaOH solution is added to the sintered graphite, stirred for 30 minutes, and then filtered using vacuum filtration. The resulting filter cake of the washed graphite can be further washed using water, particularly with hot or boiling deionized water with stirring until the temperature cools to room temperature. DI water washing can be repeated multiple times until a pH of approximately 7 is achieved. After the final wash and filtration, the filter cakes can be dried, such as in a convention oven at 140°C overnight using a drying sheet.

An enhancement to the present method includes, after washing the sintered graphite with the aqueous wash solution, further washing with an acidic wash solution, as disclosed at step 224. The acidic wash solution may comprise HCl or sulfuric acid, as depicted at step 226. As an example of an HCL wash, 20g of roasted graphite in a 500 mL glass beaker was combined with 20mL of concentrated HCl (36.5%), and the combination was stirred for 1 hour to form a homogeneous dispersion. Alternatively, more dilute concentrations of acid can be used, such as a 9% or an 18% HCl solution. The ratio of graphite to acid solution can be between 1:1 and 1:4, such as 1:1 to 1:2 to achieve a final pH that is less than neutral, such as between 5 and less than 7. The washed dispersion is then filtered using vacuum filtration. As with the water/hydroxide wash above, a filter cake form results, to which boiling deionized water can be added with stirring until the temperature cooled down to room temperature. Multiple acidic washes (three is exemplary) may be performed. After the final wash and filtration, the purified graphite filter cakes were dried.

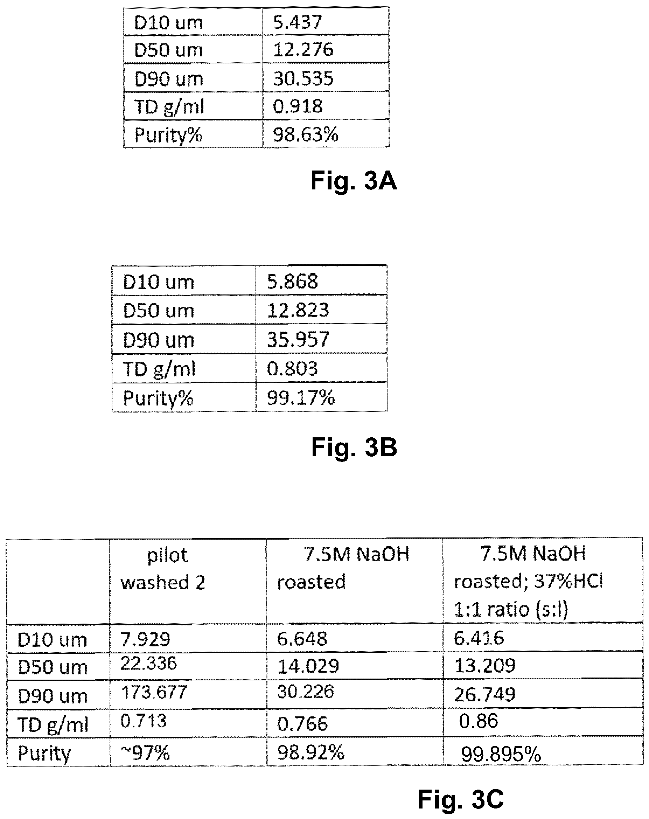

Figs. 3A-3C are examples properties of exemplary purified graphite resulting from the disclosed method, including a particle size distribution, a tap density (TD, measured in gr/mL) and a percent purity. Particle size distributions are commonly represented by multiple values that describe the shape of the distribution curve. In the figures, D10, D50, and D90 values are recorded. D90 describes the particle size at which 90% of the particles have a smaller particle size and 10% have a larger particle size. Similarly, D10 is the size at which 10% of the particles are smaller and 90% are larger. D50 is the 50th percentile particle size in the distribution.

Referring to Figs. 3A-3C, Fig. 3A shows an analysis of a purified graphite resulting after a first roasting followed by water washing, is shown. The purified graphite was found to have a purity of 98.63% and a particle size distribution similar to a commercially available graphite (D50 between 15 and 25 microns). Fig. 3B depicts results after double roasting (2 iterations of sintering followed by water washing, resulting in a similar particle size distribution and a significantly improved purity of 99.17%. In accordance with the claimed approach, two roasting steps were found to produce higher purity graphite.

Finally, Fig. 3C shows three trials corresponding to purified graphite products resulting from different preferred aspects of the disclosed method. In these figures, as can be seen in column 1, a control group, which is a precipitate recovered after leaching of a black mass and subsequently washed with DI water, yields a purity of approximately 97%. In the second column, following two roasting cycles as in Fig. 2 using a 7.5M NaOH solution for each roasting step, and then washing the purified graphite that results after double roasting with DI water produces a purified graphite product having a purity of 98.92%, which is a significant improvement over the control washed graphite. Furthermore, as shown in the third column, by including an additional wash with 37% HCl solution (1: 1) followed by a final water wash, an exemplary purity of 99.90% is exhibited in the purified graphite product.

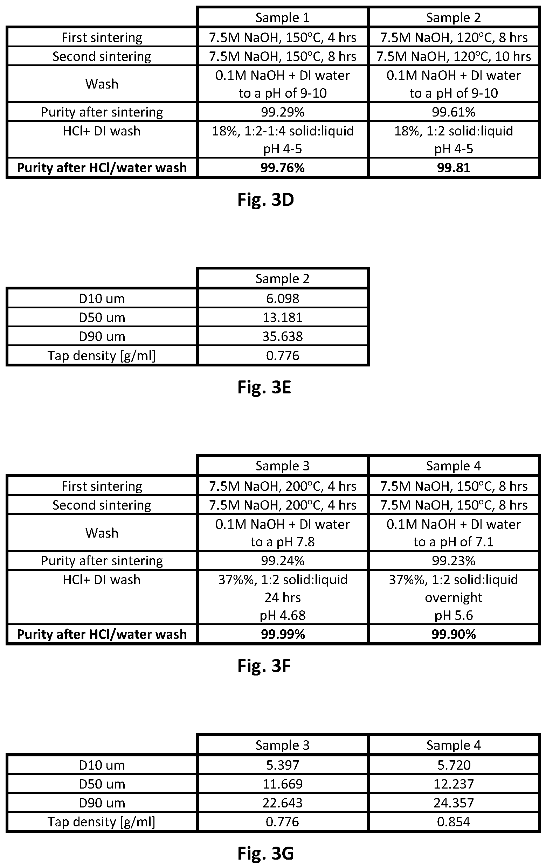

Figs. 3D and 3E show properties of additional examples of purified graphite products of the present disclosure. As shown in Fig 3D, two samples of purified graphite were prepared using a double roasting process with a 7.5M NaOH solution for each roasting step followed by washing with a dilute aqueous base (0.1M NaOH solution) and DI water to a pH of 9-10. Sample 1 was prepared by roasting at a temperature of 150°C for 4 hours and 8 hours while Sample 2 was prepared by roasting at a temperature of 120°C for 8 hours and 10 hours. After washing, Sample 1 was found to have a high purity value of 99.29%, and Sample 2 had a higher purity of 99.61%. Additionally, inclusion of an HCl/water wash provided further improved purity values of 99.76% and 99.81% respectively. This demonstrates that lower roasting temperatures for slightly longer times can be used to produce purified graphite products having significantly high purity values. Fig. 3E shows the particle size distribution of Sample 2, which is consistent with those shown in Figs 3A-3C, along with an acceptable tap density value.

In addition, Figs. 3F and 3G show properties of additional examples of purified graphite products of the present disclosure. As shown in Fig 3F, two samples of purified graphite were prepared using a double roasting process with a 7.5M NaOH solution for each roasting step followed by washing with a dilute aqueous base (0.1M NaOH solution) and DI water to a pH of less than 8. Sample 3 was prepared by roasting twice at a temperature of 200°C for 4 hours, and Sample 4 was prepared by roasting twice at a temperature of 150°C for 8 hours. After washing, Sample 3 and Sample 4 were found to have a purity value of 99.24% and 99.23% respectively. Additionally, inclusion of an HCl/water wash provided further improved purity values of 99.99% and 99.90% respectively. Fig. 3G shows the particle size distribution of Samples 3 and 4, which is consistent with those shown in Figs 3A-3C and Fig. 3E, along with an acceptable tap density value.

While the system and methods defined herein have been particularly shown and described with references to embodiments thereof, it will be understood by those skilled in the art that various changes in form and details may be made therein without departing from the scope of the invention encompassed by the appended claims.

## Claims

1. A method of producing a purified graphite from a recycled battery stream comprising:
leaching a black mass of exhausted lithium-ion batteries to obtain a leach solution and a precipitate comprising graphite;
sintering the precipitate by
preparing a slurry of the precipitate with a first aqueous solution of a hydroxide base having a concentration of hydroxide of ≤ 40% by weight and
roasting the slurry of the precipitate at a temperature of < 250°C to form a sintered precipitate;
sintering the sintered precipitate by
preparing a slurry of the sintered precipitate with a second aqueous solution of a hydroxide base having a concentration of hydroxide of ≤ 40% by weight, and
roasting the slurry of the sintered precipitate at a temperature of < 250°C to form a sintered graphite; and
washing the sintered graphite to form a purified graphite.

2. The method of claim 1, wherein the slurry of the precipitate is prepared with a ratio of the precipitate to the first aqueous solution of about 1: 1 to 1:4.

3. The method of claim 1 or claim 2, wherein the slurry of the sintered precipitate is prepared with a ratio of the sintered precipitate to the second aqueous solution of about 1: 1 to 1:4.

4. The method of any preceding claim, wherein the concentration of the first aqueous solution and the concentration of the second aqueous solution are the same.

5. The method of any preceding claim, wherein the concentration of the first aqueous solution, the concentration of the second aqueous solution, or both is from 10% to 35% by weight, preferably from 20% to 30% by weight.

6. The method of any preceding claim, wherein the hydroxide base is NaOH or KOH.

7. The method of any preceding claim, wherein the slurry of the precipitate, the slurry of the sintered precipitate, or both is roasted at a temperature of from 100°C to 225°C.

8. The method of any preceding claim, wherein the slurry of the precipitate, the slurry of the sintered precipitate, or both are roasted for a time of from 1 to 20 hours, preferably from 1 to 15 hours.

9. The method of any preceding claim, wherein the precipitate further comprises a ceramic impurity, preferably wherein the ceramic impurity is alumina.

10. The method of any preceding claim, wherein the sintered graphite is washed with an aqueous wash solution to a pH of from 6 to 10.

11. The method of claim 10, wherein the aqueous wash solution is water or wherein the aqueous wash solution is an aqueous alkaline solution having a concentration of base that is ≤ 0.1M.

12. The method of claim 10 or claim 11, wherein, after washing the sintered graphite with the aqueous wash solution, further washing with an acidic wash solution followed by washing with water, preferably wherein the acidic wash solution comprises HCl or sulfuric acid.

13. The method of any preceding claim, wherein the precipitate comprises graphite having a purity of from 82% to 97%.

14. The method of any preceding claim, wherein the purified graphite has a purity of greater than 99.5%.

15. A method of producing a purified graphite from a recycled battery stream comprising:
leaching a black mass of exhausted lithium-ion batteries to obtain a leach solution and a precipitate comprising graphite having a purity of from 82% to 97% and a ceramic impurity comprising alumina;
sintering the precipitate by:
preparing a slurry of the precipitate with an aqueous NaOH solution having a concentration of hydroxide of from 20% to 30% by weight and
roasting the slurry of the precipitate at a temperature of from 150°C to 220°C to form a sintered precipitate;
sintering the sintered precipitate by:
preparing a slurry of the sintered precipitate with the aqueous NaOH solution, and
roasting the slurry of the sintered precipitate at a temperature of from 150°C to 220°C to form a sintered graphite; and
washing the sintered graphite with an aqueous wash solution to form a purified graphite having a purity of greater than 99.5%.
